# FASCICULE DE BREVET EUROPEEN

(11) **EP 1 561 194 B1**
(45) Date de publication et mention de la délivrance du brevet: **26.04.2006**
(21) Numéro de dépôt: 03782544.5
(22) Date de dépôt: 12.11.2003
(51) Int. Cl.: G09B 29/04, B31B 3/14, B42D 15/04

(54) **DOCUMENT IMPRIME REPLIE EN PLUSIEURS VOLETS**
MEHRFACH GEFALTETE DRUCKSACHE
PRINTED DOCUMENT FOLDED IN SEVERAL FLAPS

(30) Priorité: 14.11.2002 FR 0214247
(43) Date de publication de la demande: 10.08.2005
(73) Titulaire: Wallon Imprimeur SA., 03270 Saint-Yorre (FR)
(72) Inventeur: DE LA MOTTE-BOULOUMIE, Xavier, F-03200 Vichy (FR); COLLARD, Gerard, F-3200 Le Vernet (FR)
(74) Mandataire: Schouller, Jean-Philippe
(86) Numéro de dépôt international: PCT/FR2003/003351
(87) Numéro de publication internationale: WO 2004/047051

(56) Documents cités:
- DE-A- 4 239 974
- US-A- 5 518 488

## Description

L'invention a trait à un document imprimé repliable en plusieurs volets et à un procédé de fabrication d'un tel document.

Dans le domaine des documents en papier comportant une information graphique, notamment ceux représentant la cartographie d'une exposition, d'une ville ou de tout autre lieu, il est fréquent que ces documents, de dimensions importantes, soient repliés en plusieurs volets pour en faciliter le transport. De par leurs manipulations fréquentes, ces documents ont tendance à avoir leurs faces extérieures rapidement abîmées. Une solution connue consiste à insérer, et éventuellement coller, au moins une des faces d'un tel document entre les couvertures plus rigides d'un autre document. De tels documents ont néanmoins une épaisseur et un encombrement importants ne rendant pas leurs manipulations faciles.

Il est connu de DE-A-42 39 974 un document imprimé formé de trois couches. La couche intermédiaire est découpée en volets dont une partie est adhésive, ces volets permettent, par leurs parties adhésives, de relier entre elles les trois couches. Ces volets peuvent effectuer un déplacement latéral de manière à faire apparaître alternativement l'une ou l'autre de leur face en partie supérieure du document. Ce document ne peut pas être produit en continu.

Une autre solution est décrite dans le document EP-0288472. Il s'agit d'un document plié en accordéon puis en Z de manière à occuper un minimum de place. Chacune des deux faces extérieures d'un tel document est collée à une partie rigide de dimensions légèrement supérieures à celles du document replié. Ces parties rigides forment la première et la quatrième de couverture.

Un tel document présente un inconvénient. En effet, il ne peut être produit en continu, les parties formant les couvertures étant rapportées feuille à feuille. La complexité, la durée et le coût du procédé de fabrication qui consiste à imprimer et à replier la partie cartographiée de chaque document avant de la coller aux couvertures, elles-mêmes préalablement imprimées, limite l'usage et la diffusion d'un tel produit.

C'est à cet inconvénient qu'entend plus particulièrement remédier l'invention en proposant un document imprimé repliable en plusieurs volets, protégé par des couvertures et aisément manipulable.

Un autre but de la présente invention est de réaliser un tel document par impression et façonnage en continu afin d'obtenir un prix de revient attractif et des délais de réalisation relativement courts.

A cet effet, l'invention a pour objet un document imprimé en papier, pouvant être replié en plusieurs volets dont au moins un forme une des couvertures du document, caractérisé en ce que le document comprend au moins une première zone contrecollée destinée à former une des couvertures du document, et au moins une autre zone contrecollée destinée à former une des lignes de pliage du document.

Grâce à l'invention, on obtient un document papier dont les dimensions, une fois replié, sont suffisamment réduites pour qu'il soit aisément manipulable et facile à ranger dans une poche de vêtement ou dans un sac ou inséré dans un emballage de produits de grande consommation. La partie du document supportant les informations se retrouve, lorsqu'il est replié, protégée entre deux couvertures rigides formées par une double épaisseur de papier. On obtient également une ligne de pliage principale relativement solide grâce au contrecollage.

Selon des aspects avantageux mais non obligatoires de l'invention, le document papier incorpore une ou plusieurs des caractéristiques suivantes :
- le document comprend deux premières zones contrecollées destinées à former les deux couvertures du document. L'autre zone contrecollée qui forme une ligne de pliage est contiguë à au moins une zone contrecollée formant une des couvertures. Dans un mode de réalisation préféré, l'autre zone contrecollée formant une ligne de pliage relie les deux premières zones contrecollées destinées à former deux couvertures d'un même document. Avantageusement, cette zone contrecollée comprend des micro-perforations matérialisant la ligne de pliage.

L'invention concerne également un procédé de fabrication d'au moins un document imprimé en papier, pouvant être replié en plusieurs volets dont au moins un forme une des couvertures du document, et plus spécifiquement un procédé qui comprend des étapes dans lesquelles :
- a) on imprime en continu au moins une face d'une bande de papier à l'exception d'au moins une première zone destinée à former une des couvertures et d'au moins une autre zone destinée à définir une ligne de pliage, zones qu'on enduit d'un adhésif,
- b) on divise la bande de papier imprimée en deux bandes longitudinales imprimées,
- c) on solidarise ces deux bandes longitudinales imprimées face à face en contrecollant au moins une des zones enduites d'un adhésif et formée sur l'une de ces bandes avec une zone correspondante formée sur l'autre bande,
- d) on découpe une seule des deux bandes ainsi solidarisées de manière à pouvoir plier et déplier le document selon la ligne de pliage.

Selon des aspects avantageux mais non obligatoires de l'invention, le procédé incorpore une ou plusieurs étapes supplémentaires, dans lesquelles :
- e) On replie en plusieurs volets les bandes ainsi formées selon d'autres lignes de pliage pré-établies, de sorte que les deux premières zones contrecollées forment les couvertures du document.
- f) On découpe transversalement les bandes de papier pour individualiser les documents.

- Après l'étape b) et avant l'étape c) ou après l'étape c) et avant l'étape d) on matérialise la ligne de pliage en bordure d'une zone contrecollée par des micro-perforations.
- Lors de l'étape d), on découpe la bande d'une part, le long d'un bord commun à chaque couverture et à une zone imprimée de cette bande et, d'autre part, le long de la zone contrecollée définissant la ligne de pliage d'un document adjacent.
- Lors de l'étape d), on découpe la bande uniquement le long de la zone contrecollée définissant la ligne de pliage d'un document adjacent.

Avantageusement le procédé comprend une étape :
- g) postérieure à l'étape b), dans laquelle on contrecolle une partie de l'une des bandes sur une autre partie de la même bande pour constituer les couvertures du document.

La fabrication en continu d'un tel document à partir d'une bande de papier imprimée permet d'assurer une diffusion à grande échelle et à un moindre coût, par exemple dans le cadre d'une campagne publicitaire.

L'invention sera mieux comprise et d'autres avantages de celle-ci apparaîtront plus clairement à la lumière de la description qui va suivre d'un mode de réalisation d'un document conforme à l'invention et de deux procédés de fabrication, donnée uniquement à titre d'exemple et faite en référence aux dessins annexés dans lesquels :
- la figure 1 est une vue en perspective d'un document conforme à l'invention en position ouverte ;
- la figure 2 est une vue partielle de dessus d'une bande de papier imprimée en continu, comportant des documents, représentés à la figure 1, en cours de fabrication selon un premier procédé, avant division de la bande de papier en deux bandes égales et contrecollage ;
- la figure 3 est une vue partielle en perspective de deux bandes imprimées, obtenues après division de la bande initiale selon le premier procédé, présentées face à face avant contrecollage ;
- la figure 4 est une vue partielle de dessus des deux bandes représentées à la figure 3 contrecollées,
- la figure 5 est une vue partielle en perspective du document représenté à la figure 4 après l'opération de découpage partielle de la bande de papier supérieure et avec individualisation d'un document,
- la figure 6 est une vue partielle de dessus d'une bande de papier imprimée en continu, selon un second procédé de fabrication, avant division de la bande de papier en deux bandes inégales et contrecollage,
- la figure 7 est une vue partielle en perspective de deux bandes imprimées et inégales, obtenues après division de la bande initiale selon le second procédé, présentées face-à-face et
- la figure 8 est une vue partielle de dessus des deux bandes représentées à la figure 7, contrecollées et avec les zones partiellement enduites d'adhésif en cours de pliage.

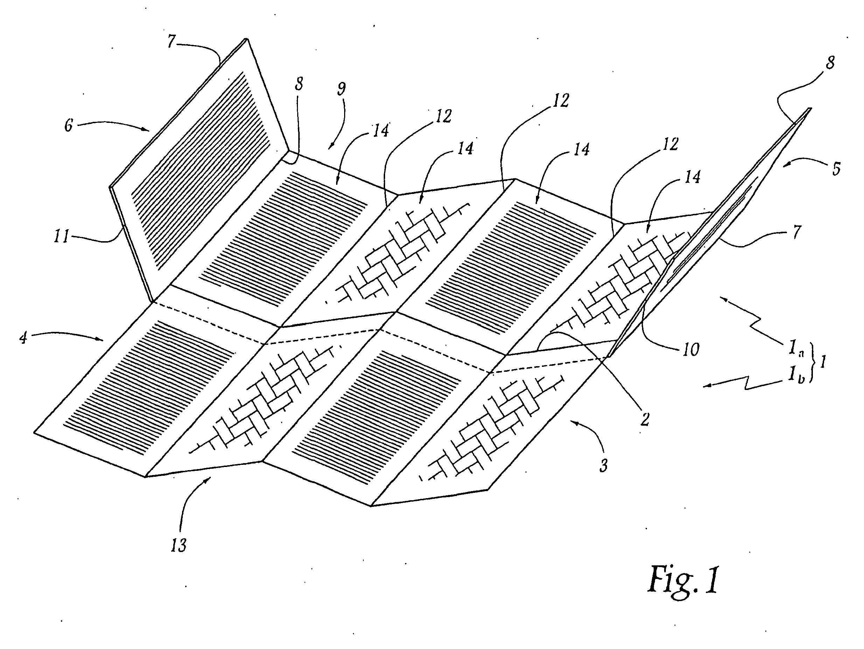

Le document 1 représenté figure 1 a un corps principal de forme globalement rectangulaire. Une ligne de pliage longitudinale 2 s'étend sur tout le document selon une direction globalement orthogonale aux deux petits côtés 3 et 4 du document qu'elle relie. Elle divise en deux parties globalement équivalentes 1a, 1b le document. Cette ligne de pliage 2 est matérialisée par la bordure microperforée d'une zone constituée de deux épaisseurs de papier. De chaque côté du document 1, et s'étendant vers l'extérieur, deux zones en double épaisseur forment les couvertures 5 et 6 proprement dites du document 1. Ces couvertures 5 et 6 ont globalement une forme rectangulaire dont un des grands côtés 7 ou 8 est solidaire d'une partie d'un petit côté 3 ou 4 du document 1. Ces grands côtés 7 et 8 ont une longueur globalement égale à la moitié de celle des petits côtés 3 et 4. Chaque couverture 5 ou 6 est située entre un grand côté 9 du document et la ligne de pliage 2. De cette manière la ligne de pliage 2 relie globalement un petit côté 10 ou 11 d'une couverture 5 ou 6 à un autre petit côté 10 ou 11 d'une autre couverture 5 ou 6. Le document 1 comprend également des lignes de pliage transversales 12 s'étendant sur toute la largeur du document entre ses deux grands côtés 9 et 13. Ces lignes sont régulièrement espacées et globalement parallèles aux petits côtés 3 et 4 du document. Elles permettent un pliage en plis parallèles, par exemple en accordéon, du document en plusieurs volets 14.

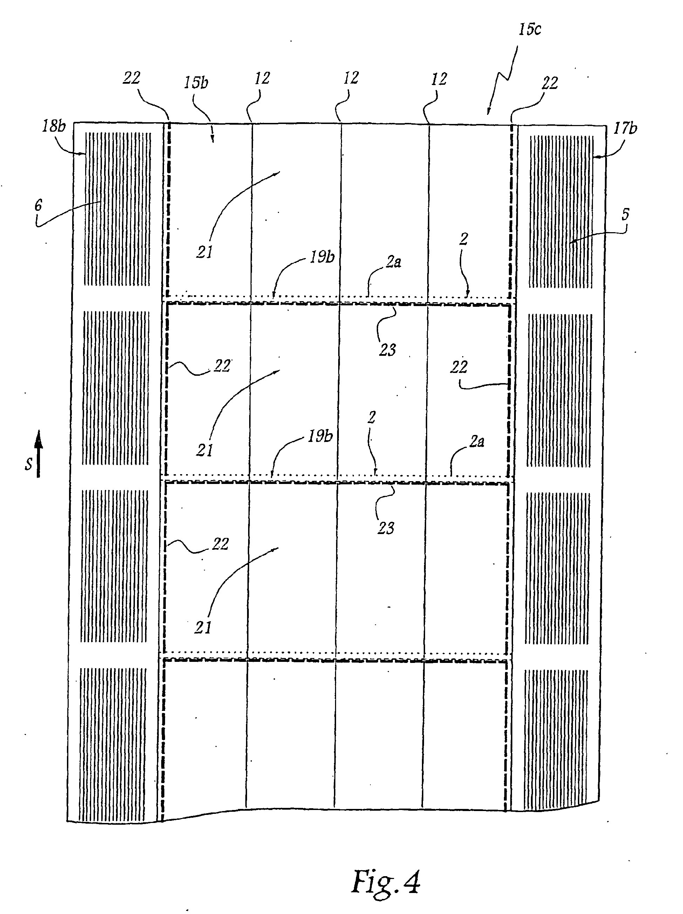

Pour refermer le document, on rabat selon la ligne de pliage 2 les deux parties 1a, 1b du document l'une sur l'autre et on replie ensuite, selon les lignes de pliage transversales 12, le document 1 sur lui-même de manière à ce que l'ensemble des volets 14 imprimés se trouve rangé entre les deux couvertures 5 et 6. Pour ouvrir le document, il suffit d'écarter l'une de l'autre les couvertures 5 et 6 pour déplier les volets 14 selon les lignes 12 puis d'écarter les parties 1a, 1b selon la ligne de pliage 2. Le pliage et le dépliage selon la ligne de pliage 2 étant facilitées par des micro-perforations 2a représentées à la figure 4.

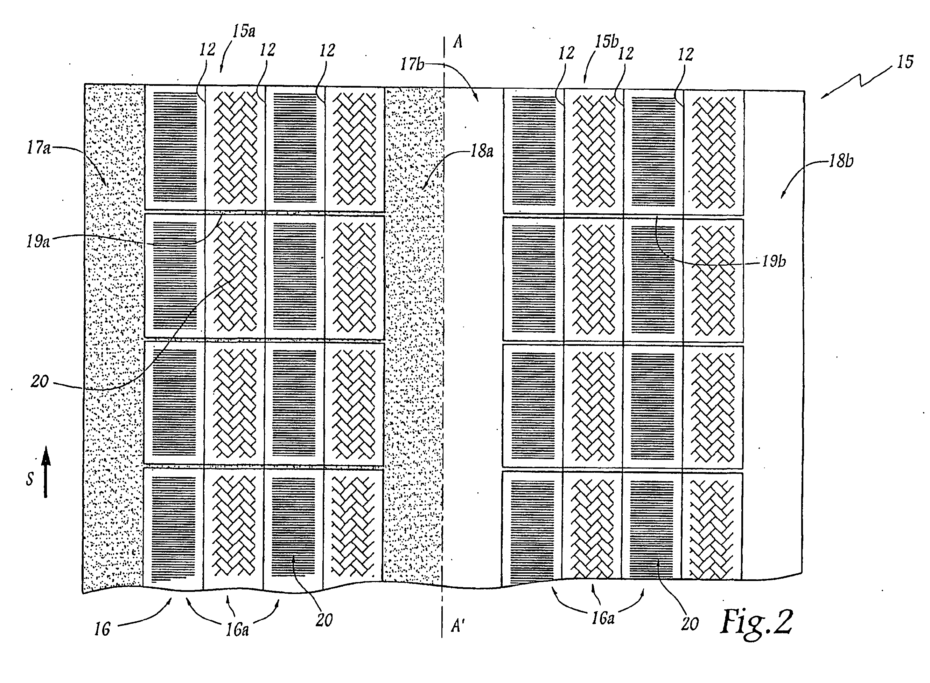

Pour réaliser de tels documents et selon un premier procédé, on imprime en continu une bande de papier 15 représentée à la figure 2. L'impression est effectuée sur la majeure partie d'une face 16 de la bande 15. Cette bande comporte, outre les zones imprimées 16a, des zones 17a, 17b et 18a, 18b imprimées sur leurs faces opposées à la face 16. Ces zones 17a, 17b et 18a, 18b, destinées au contrecollage, s'étendent sur toute la longueur de la bande 15. Elles ont une forme de bandelette rectangulaire dont la largeur est globalement égale à la longueur des petits côtés 10 et 11 des couvertures 5 et 6 du document. Seules les zones 17a et 18a sont enduites d'adhésif. Deux zones 18a et 17b jointives sont situées de part et d'autre de l'axe longitudinal AA' séparant la laize de la bande de papier 15 en deux bandes de même largeur 15a et 15b. Les deux autres zones 17a et 18b constituent les bords longitudinaux extérieurs de la bande 15.

La bande de papier 15 comporte également plusieurs zones 19a enduites d'un adhésif et 19b sans adhésif, situées sur la laize de papier et globalement parallèles à la largeur de la bande 15. Les zones 19a pré-encollées, régulièrement espacées, relient ainsi une zone longitudinale extérieure pré-encollée 17a à une zone pré-encollée 18a située le long de l'axe AA'. On obtient ainsi une bande de papier 15 dont une face 16 est partiellement enduite d'un adhésif, formant un maillage continu sur toute la laize de la bande. Ce maillage comprend des zones longitudinales 17a, 17b, 18a, 18b parallèles entre elles et globalement parallèles au sens S de défilement de la bande. Des zones 19a, 19b, plus étroites, sont disposées parallèlement entre elles sur la laize de la bande 15 et sont globalement orthogonales au sens S de défilement de cette dernière. On obtient ainsi, deux séries parallèles 15a, 15b d'espaces 20 adjacents délimités respectivement chacun par deux segments de zones 17a, 18a et 17b, 18b parallèles, reliées par des zones 19a, 19b parallèles. Chaque espace 20 correspond globalement à une moitié de la partie imprimée du document 1.

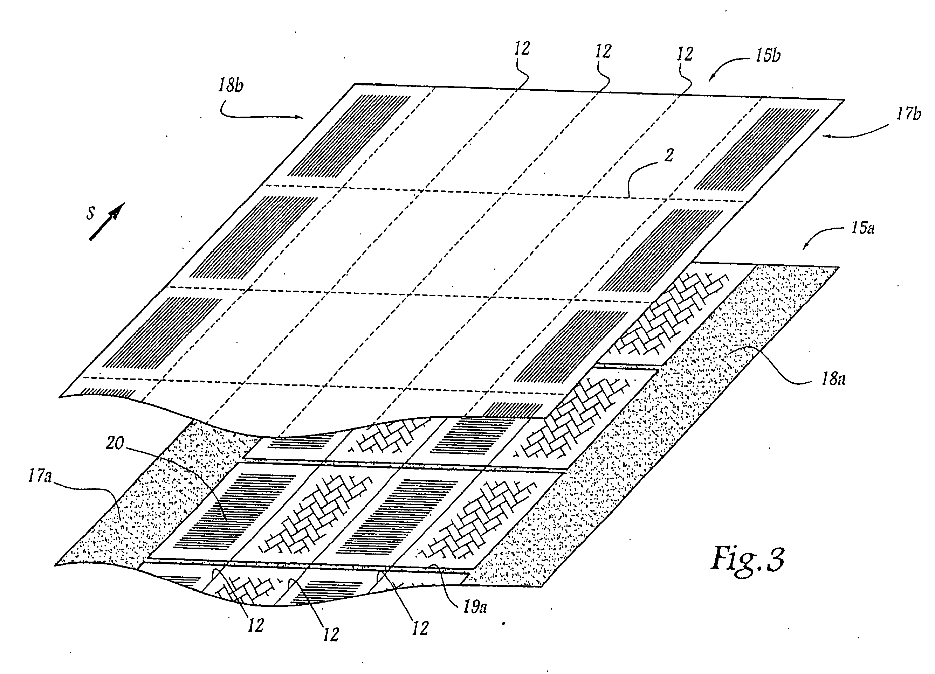

La bande de papier 15 comporte également des lignes de pliage 12 préformées, en nombre suffisant pour obtenir le pliage final, disposées parallèlement au sens S de défilement de la bande de papier 15 sur toute la longueur de celle-ci. Lorsqu'on découpe la bande de papier 15 selon son axe longitudinal AA', on obtient deux bandes longitudinales de papier 15a, 15b, chacune d'une largeur globalement équivalente à la moitié de la laize initiale. Comme représenté à la figure 3, lorsqu'on présente face-à-face ces deux bandes de papier 15a, 15b de manière à ce que les zones pré-encollées 17a, 18a et 19a soient exactement en regard avec, respectivement, les zones 18b, 17b et 19b, leurs espaces imprimées 20 se trouvent aussi face à face. Lorsqu'on associe, par contrecollage des zones 17a, 17b, 18a, 18b, 19a et 19b, les deux bandes de papier 15a, 15b, comme représenté à la figure 4, on obtient une bande longitudinale 15c de largeur globalement équivalente à celle d'une demie bande 15 initiale et constituée d'une double épaisseur de papier.

Les bords longitudinaux de cette bande 15c sont constitués par les zones 17a, 17b, 18a et 18b contrecollées. Elles forment ainsi les couvertures 5 et 6 des documents. De même les zones 19a et 19b coopèrent entre elles. Les parties imprimées 20 des deux bandes 15a, 15b, superposées face imprimée en regard, sont régulièrement délimitées par les zones contrecollées 17a, 17b, 18a, 18b, 19a et 19b.

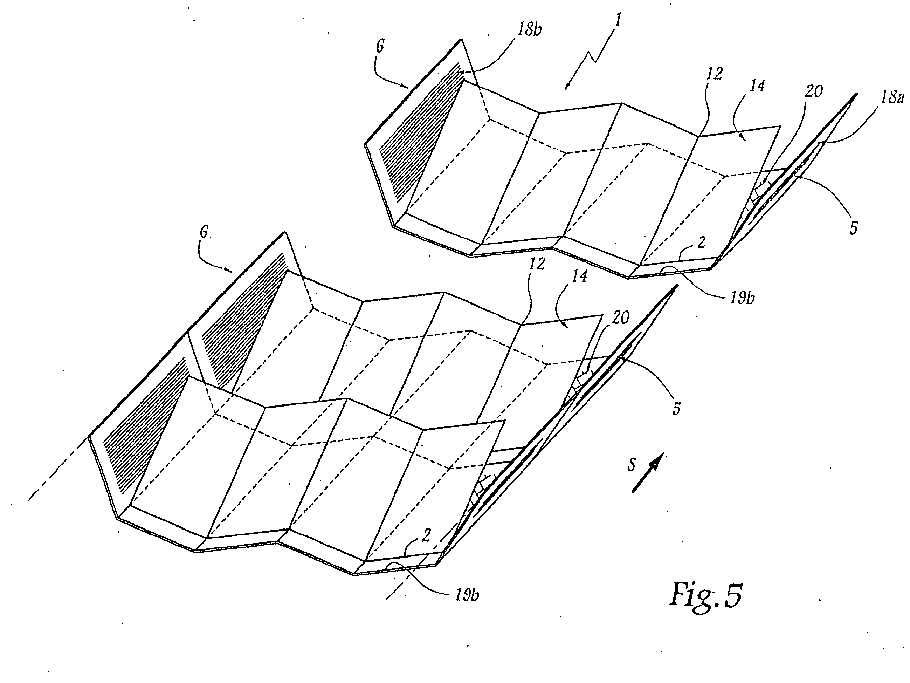

Cette bande de papier 15c a donc globalement l'aspect d'une succession d'enveloppes à soufflets. Ces « soufflets » 21 ont des parties communes constituées par les bords longitudinaux 17a, 17b, 18a et 18b de la bande de papier et par les zones 19a et 19b. Comme le montre la figure 5, il suffit de découper par des techniques connues, telles celle dite KISS-CUTTING, une seule 15b des deux bandes superposées 15a, 15b pour obtenir les volets 14 du document final. Une ligne de découpe 22 est située le long de chaque bord « intérieur » des zones contrecollées 17a, 17b, 18a et 18b formant les couvertures et parallèle au sens S de défilement de la bande. Cette ligne 22 est discontinue au niveau de ses intersections avec les zones 19a, 19b. Sur un côté de chaque zone 19a et 19b se trouve une ligne de découpe 23, parallèle à la zone 19a, 19b, reliant les deux lignes de découpe 22.

Un soufflet 21, délimité par deux zones 19a, 19b et deux zones 17a, 17b, 18a, 18b formant respectivement ses grands et petits côtés, présente deux segments de lignes de découpe 22 reliés par une ligne de découpe 23.

Seul le soufflet 21 situé au début de la bande 15c ne possède pas de ligne de découpe 23.

Une découpe de la seule bande 15b selon ses lignes 22 et 23 permet d'ouvrir le soufflet 21 et de déplier la partie 20 de la bande 15b selon la ligne de pliage 2 formée par la bordure d'une zone 19b sur laquelle on effectue, à l'aide du même outil effectuant la découpe, des micro-perforations 2a afin d'obtenir une ligne de pliage 2 rectiligne.

Le document 1 est ensuite replié en plis parallèles, par exemple en accordéon, suivant les lignes de pliage 12 préformées de manière à venir superposer les parties imprimées 20 entre les deux couvertures 5 et 6.

Il suffit alors de tronçonner la bande de papier en suivant les zones contrecollées 19a, 19b pour individualiser les documents 1.

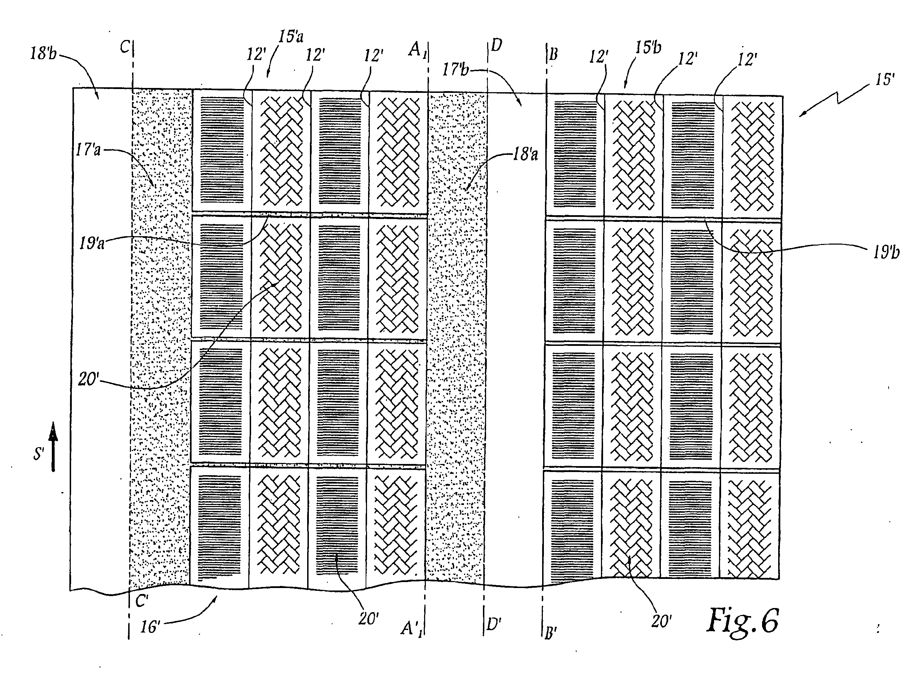

Dans un second procédé de fabrication, un document 1 identique à celui représenté en figure 1 est produit à partir d'une bande de papier imprimée 15'. Ce second procédé de fabrication se distingue du précédent par les étapes représentées aux figures 6, 7 et 8.

La bande de papier 15' représentée à la figure 6 est imprimée sur une face 16'. Elle comprend, outre ces zones imprimées, deux zones 17'a et 18'a enduites d'un adhésif et deux zones 17'b, 18'b sans adhésif. Ces zones 17'a, 17'b, 18'a, 18'b sont imprimées sur leurs faces opposées à la face 16'. Les zones 17'a et 18'a, de forme analogue à celles des zones 17a et 18a décrites dans le précédent procédé de fabrication, se situent pour l'une 17'a entre une zone imprimée 20' et une zone 18'b adjacente à l'un des bords longitudinaux extérieurs de la bande 15'. La zone 18'a se situe globalement sur un des côtés de l'axe longitudinal A₁A₁' de la bande de papier 15'. Une première zone imprimée 20' se situe entre les zones 17'a et 18'a, une deuxième zone imprimée 20' se situe entre l'autre bord longitudinal extérieur de la bande 15' et la zone 17'b située sur l'autre côté de l'axe A₁A'₁. Chacune de ces zones 17'a, 17'b, 18'a, 18'b a une largeur sensiblement égale à la largeur des couvertures 5' et 6'.

De façon analogue à la bande de papier 15 décrite lors du premier procédé de fabrication, la bande de papier 15' comporte des zones 19'a enduites d'un adhésif, des zones 19'b sans adhésif et destinées, après contrecollage, à définir les lignes de pliage 2'. Lorsque l'on découpe cette bande de papier 15' selon la ligne B-B' correspondant au bord longitudinal de la zone 17'b situé au contact de la zone de la bande 15' imprimée, on obtient deux bandes 15'a et 15'b. Ces deux bandes longitudinales présentent une même face 16' imprimée et sont de largeur inégale. La bande de papier 15'a présente une zone imprimée de même largeur que la bande 15'b encadrée par les zones 17'a, 17'b, 18'a et 18'b.

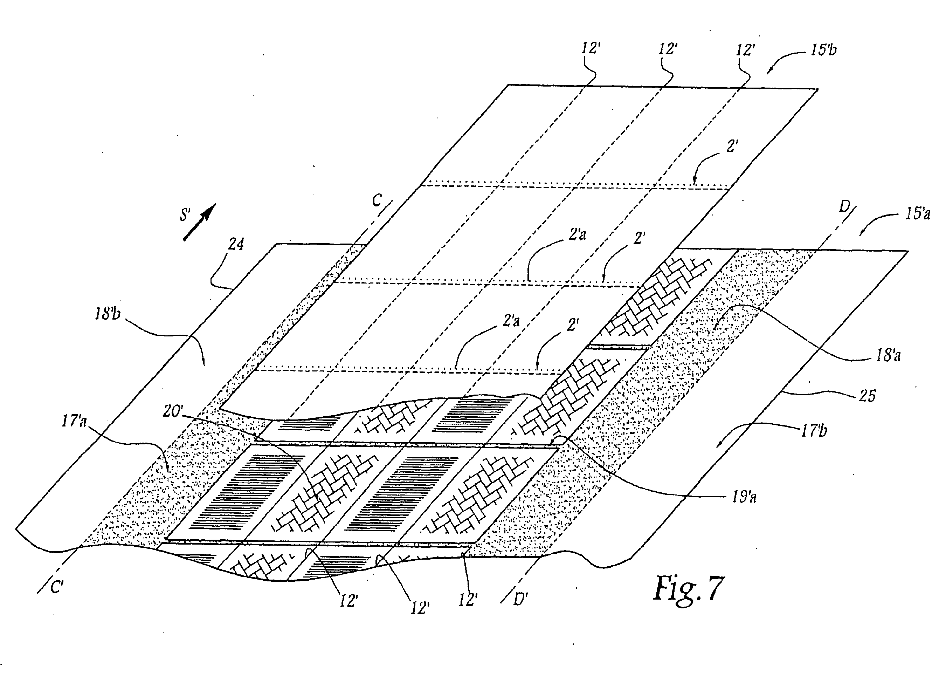

Comme représenté à la figure 7, lorsque l'on présente face-à-face ces deux bandes de papier 15'a et 15'b de manière à ce que les zones imprimées et les zones 19'a, 19'b soient en regard l'une de l'autre, on obtient une bande longitudinale 15'c présentant une zone centrale en double épaisseur encadrée par deux bandes enduites d'un adhésif sur une moitié de leurs largeurs. Préalablement à cette superposition des deux bandes 15'a et 15'b, les lignes de pliage 2' sont matérialisées en bordure des zones non enduites 19'b par microperforation de cette bordure.

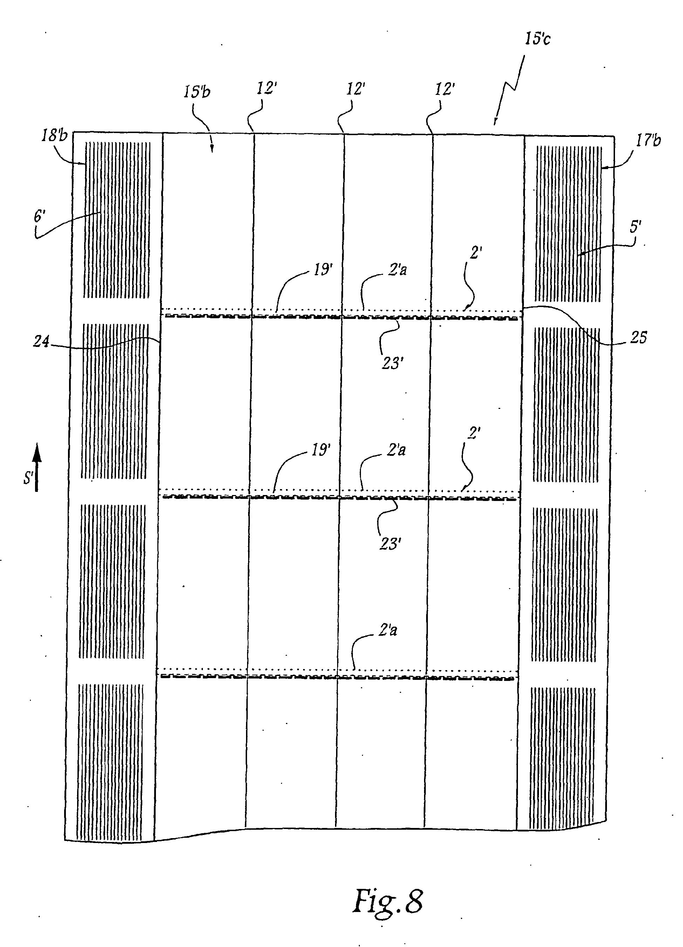

Comme représenté à la figure 8, si l'on replie selon les axes longitudinaux respectifs CC', DD' les zones 18'b sur 17'a et 17'b sur 18'a on amène leur bords longitudinaux extérieurs, respectivement 24 et 25, en contact avec les deux bords longitudinaux de la zone formée par contrecollage des zones imprimées, respectivement, de 15'a et de 15'b.

Dans une dernière étape, analogue à celle décrite lors du premier procédé de fabrication, on replie le document en plis parallèles selon les lignes de pliage transversales 12' de manière à superposer les parties imprimées entre les deux couvertures 5' et 6' puis, on tronçonne la bande de papier en suivant les zones contrecollées 19'a, 19'b pour individualiser les documents 1.

Un tel procédé de fabrication comporte une alternative à l'étape de découpage selon les lignes 22 décrite lors du premier procédé.

On obtient ainsi, selon l'un ou l'autre de ces procédés de façonnage en continu, des documents imprimés ayant un encombrement réduit, réalisés rapidement à un faible coût et en quantité importante.

Dans un autre mode de réalisation, on peut envisager d'effectuer un pelliculage d'une ou deux faces des couvertures 5 et 6. Il est également envisageable d'effectuer un pliage selon l'axe médian longitudinal AA' de la bande de papier 15 initiale sans effectuer de séparation en deux bandes 15a, 15b selon cet axe. Le document présente alors une forme et un pliage différents.

Le document conforme à l'invention est avantageusement réalisé à partir de feuilles de papier d'un grammage et de dimensions couramment rencontrés en imprimerie et suffisants pour obtenir un document final aisé à manipuler tout en restant relativement rigide et résistant.

## Revendications

1. Document imprimé en papier fabriqué suivant un procédé selon au moins une des revendications 6 à 12 et pouvant être replié en plusieurs volets dont au moins un forme une des couvertures du document, **caractérisé en ce que** ledit document (1) comprend sur une face (16, 16') au moins une première zone, non imprimée, contrecollée (17a, 17b, 18a, 18b, 17'a, 17'b, 18'a, 18'b) destinée à former une des couvertures (5, 6, 5', 6') dudit document (1), et au moins une autre zone (19a, 19b, 19'a, 19'b), non imprimée, contrecollée destinée à former une des lignes de pliage (2, 2') dudit document (1) permettant de plier et déplier ce dernier.

2. Document selon la revendication 1, **caractérisé en ce que** ledit document (1) comprend deux premières zones contrecollées (17a, 17b, 18a, 18b, 17'a, 17'b, 18'a, 18'b) destinées à former les deux couvertures (5, 5' et 6, 6') dudit document (1).

3. Document selon la revendication 1, **caractérisé en ce que** ladite autre zone contrecollée (19a, 19b, 19'a, 19'b) formant une ligne de pliage (2, 2') est contiguë à au moins une zone contrecollée (17a, 18b ou 17b, 18a ; 17'a, 18'a ou 17'b, 18'a) formant une des couvertures (5, 5' ou 6, 6').

4. Document selon les revendications 2 et 3, **caractérisé en ce que** ladite autre zone contrecollée (19a, 19b ; 19'a, 19'b) formant une ligne de pliage (2, 2') relie les deux premières zones contrecollées (17a, 18b et 17b, 18a ; 17'a, 18'b et 17'b, 18'a) destinées à former deux couvertures (5, 5' et 6, 6') d'un même document.

5. Document selon l'une des revendications précédentes, **caractérisé en ce que** ladite zone contrecollée (19a, 19b ; 19'a, 19'b) comprend des microperforations (2a, 2'a) matérialisant la ligne de pliage (2, 2').

6. Procédé de fabrication d'au moins un document imprimé en papier (1), pouvant être replié en plusieurs volets (14, 14') dont au moins un forme une des couvertures (5, 5', 6, 6') du document (1), **caractérisé en ce que** ledit procédé comprend des étapes dans lesquelles :
- a) on imprime en continu au moins une face (16, 16') d'une bande de papier (15, 15') à l'exception d'au moins une première zone (17a, 17'a, 18a, 18'a) destinée à former une des couvertures (5, 5', 6, 6') et d'au moins une autre zone (19a, 19'a,) destinée à définir une ligne de pliage (2; 2'), zones (17a, 17'a, 18a, 18'a, 19a, 19'a) qu'on enduit d'un adhésif,
- b) on divise la bande de papier (15, 15') imprimée en deux bandes longitudinales imprimées (15a, 15b, 15'a, 15'b)
- c) on solidarise ces deux bandes longitudinales (15a, 15b, 15'a, 15'b) imprimées face-à-face en contrecollant au moins une des zones (17a, 18a, 19a, 19'a) enduites d'un adhésif et formée sur l'une de ces bandes (15a, 15'a) avec une zone correspondante (17b, 18b, 19b, 19'b) formée sur l'autre bande (15b, 15'b).
- d) on découpe (en 22, 23, 23') une seule (15b, 15'b) des deux bandes (15a, 15b, 15'a, 15'b) ainsi solidarisées de manière à pouvoir plier et déplier le document selon ladite ligne de pliage (2, 2').

7. Procédé selon la revendication 6, **caractérisé en ce que**, dans une étape supplémentaire
- e) on replie en plusieurs volets (14, 14') les bandes (15c, 15'c) ainsi formées selon d'autres lignes de pliage (12, 12') pré-établies, de sorte que les deux premières zones (17a, 17b, 18a, 18b, 17'a, 17'b, 18'a, 18'b) contrecollées forment les couvertures (5, 5', 6, 6') du document.

8. Procédé selon les revendications 6 et 7, **caractérisé en ce que**, dans une étape supplémentaire :
- f) on découpe transversalement les bandes de papier (15c, 15'c), pour individualiser les documents (1).

9. Procédé selon l'une des revendications 6 à 8, **caractérisé en ce que** après l'étape b) et avant l'étape c) ou après l'étape c) et avant l'étape d), on matérialise la ligne de pliage (2, 2') en bordure d'une zone contrecollée (19b, 19'b) par des micro-perforations (2a, 2'a).

10. Procédé selon l'une des revendications 6 à 9, **caractérisé en ce que** lors de l'étape d) on découpe (en 22, 23) ladite bande (15b) d'une part le long d'un bord commun à chaque couverture (5, 6) et à une zone imprimée (20) de ladite bande et d'autre part le long de la zone contrecollée (19b) définissant la ligne de pliage (2) d'un document adjacent (1).

11. Procédé selon l'une des revendications 6 à 9, **caractérisé** lors de l'étape d), on découpe ladite bande (15'b) uniquement le long de la zone contrecollée (19'b) définissant la ligne de pliage d'un document adjacent (1).

12. Procédé selon la revendication 11, **caractérisé en ce qu'**il comprend une étape g) postérieure à l'étape b) dans laquelle :
- on contrecolle une partie (17'b, 18'b) de l'une (15'a) desdites bandes sur une autre partie (17'a), 18'a) de la même bande pour constituer lesdites couvertures (5', 6').

## Claims

1. A document printed on paper, produced in accordance with a process according to at least one of Claims 6 to 12 and capable of being folded up in several sections, at least one of which forms one of the covers of the document, **characterised in that** said document (1) comprises on one face (16, 16') at least one first unprinted, laminated zone (17a, 17b, 18a, 18b, 17'a, 17'b, 18'a, 18'b), which is intended to form one of the covers (5, 6, 5', 6') of said document (1), and at least one other unprinted, laminated zone (19a, 19b, 19'a, 19'b), which is intended to form one of the fold-lines (2, 2') of said document (1), enabling the latter to be folded and unfolded.

2. Document according to Claim 1, **characterised in that** said document (1) comprises two first laminated zones (17a, 17b, 18a, 18b, 17'a, 17'b, 18'a, 18'b) which are intended to form the two covers (5, 5' and 6, 6') of said document (1).

3. Document according to Claim 1, **characterised in that** said other laminated zone (19a, 19b, 19'a, 19'b) forming a fold-line (2, 2') is contiguous with at least one laminated zone (17a, 18b or 17b, 18a; 17'a, 18'a or 17'b, 18'a) forming one of the covers (5, 5' or 6, 6').

4. Document according to Claims 2 and 3, **characterised in that** said other laminated zone (19a, 19b; 19'a, 19'b) forming a fold-line (2, 2') connects the two first laminated zones (17a, 18b and 17b, 18a; 17'a, 18'b and 17'b, 18'a) which are intended to form two covers (5, 5' and 6, 6') of one and the same document.

5. Document according to one of the preceding claims, **characterised in that** said laminated zone (19a, 19b; 19'a, 19'b) comprises microperforations (2a, 2'a) creating the fold-line (2, 2').

6. A process for producing at least one document printed on paper (1) and capable of being folded up in several sections (14, 14'), at least one of which forms one of the covers (5, 5', 6, 6') of the document (1), **characterised in that** said process comprises steps in which:
- a) at least one face (16, 16') of a web of paper (15, 15') - with the exception of at least one first zone (17a, 17'a, 18a, 18'a) which is intended to form one of the covers (5, 5', 6, 6') and with the exception of at least one other zone (19a, 19'a) which is intended to define a fold-line (2, 2'), said zones (17a, 17'a, 18a, 18'a, 19a, 19'a) being coated with an adhesive - is printed continuously,
- b) the printed web of paper (15, 15') is divided into two printed longitudinal webs (15a, 15b, 15'a, 15'b),
- c) these two printed longitudinal webs (15a, 15b, 15'a, 15'b) are joined face to face by laminating at least one of the zones (17a, 18a, 19a, 19'a) coated with an adhesive which is formed on one of these webs (15a, 15'a) with a corresponding zone (17b, 18b, 19b, 19'b) which is formed on the other web (15b, 15'b),
- d) a single one (15b, 15'b) of the two webs (15a, 15b, 15'a, 15'b) which are joined in this way is cut (at 22, 23, 23') so as to be able to fold and unfold the document along said fold-line (2, 2').

7. Process according to Claim 6, **characterised in that** in a supplementary step:
- e) the webs (15c, 15'c) formed in this way are folded up in several sections (14, 14') along other preestablished fold-lines (12, 12') so that the two first laminated zones (17a, 17b, 18a, 18b, 17'a, 17'b, 18'a, 18'b) form the covers (5, 5', 6, 6') of the document.

8. Process according to Claims 6 and 7, **characterised in that** in a supplementary step:
- f) the webs of paper (15c, 15'c) are cut transversely in order to individualise the documents (1).

9. Process according to one of Claims 6 to 8, **characterised in that** after step b) and before step c) or after step c) and before step d) the fold-line (2, 2') is created along the margin of a laminated zone (19b, 19'b) by means of microperforations (2a, 2'a).

10. Process according to one of Claims 6 to 9, **characterised in that** in the course of step d) said web (15b) is cut (at 22, 23), on the one hand along an edge that is common to each cover (5, 6) and to a printed zone (20) of said web, and on the other hand along the laminated zone (19b) defining the fold-line (2) of an adjacent document (1).

11. Process according to one of Claims 6 to 9, **characterised in that** in the course of step d) said web (15'b) is cut solely along the laminated zone (19'b) defining the fold-line of an adjacent document (1).

12. Process according to Claim 11, **characterised in that** it comprises a step g) subsequent to step d), in which:
- a part (17'b, 18'b) of one (15'a) of said webs is laminated onto another part (17'a, 18'a) of the same web in order to constitute said covers (5', 6').

## Patentansprüche

1. Druckerzeugnis aus Papier, hergestellt nach einem Verfahren nach mindestens einem der Ansprüche 6 bis 12, das in mehrere Klappseiten gefaltet werden kann, von denen mindestens eine eines der Deckblätter des Erzeugnisses bildet, **dadurch gekennzeichnet, dass** das Erzeugnis (1) auf einer Fläche (16, 16') mindestens eine erste, nicht bedruckte, kaschierte Zone (17a, 17b, 18a, 18b, 17'a, 17'b, 18'a, 18'b), die dazu dient, eines der Deckblätter (5, 6, 5', 6')des Erzeugnisses (1) zu bilden und mindestens eine andere nicht bedruckte, kaschierte Zone (19a, 19b, 19'a, 19'b) umfasst, die dazu dient, eine der Faltlinien (2, 2') des Erzeugnisses (1) zu bilden, die das Falten und Entfalten dieses letzteren erlaubt.

2. Erzeugnis nach Anspruch 1, **dadurch gekennzeichnet, dass** das Erzeugnis (1) zwei erste kaschierte Zonen (17a, 17b, 18a, 18b, 17'a,17'b, 18'a, 18'b) umfasst, die zur Bildung der zwei Deckblätter (5, 5' und 6, 6') des Erzeugnisses (1) dienen.

3. Erzeugnis nach Anspruch 1, **dadurch gekennzeichnet, dass** die andere kaschierte Zone (19a, 19b, 19'a, 19'b), die eine Faltlinie (2, 2') bildet, an mindestens eine kaschierte Zone (17a, 18b oder 17b, 18a; 17'a, 18'a oder 17'b, 18'a) angrenzt, die eine der Deckblätter (5, 5' oder 6, 6') bildet.

4. Erzeugnis nach den Ansprüchen 2 und 3, **dadurch gekennzeichnet, dass** die andere kaschierte Zone (19a, 19b; 19'a, 19'b) die andere Faltlinie (2, 2') bildet, die die zwei ersten kaschierten Zonen (17a, 18b und 17b, 18a; 17'a, 18'b und 17'b, 18'a) verbindet, die zur Bildung von zwei Deckblättern (5, 5' und 6,6') eines selben Dokuments dienen.

5. Erzeugnis nach einem der vorhergehenden Ansprüche, **dadurch gekennzeichnet, dass** die kaschierte Zone (19a, 19b; 19'a, 19'b) Mikroperforationen (2a, 2'a) umfasst, die die Faltlinie (2;2') verwirklichen.

6. Verfahren zur Herstellung mindestens eines Druckerzeugnisses aus Papier (1), das mehrfach in mehrere Klappseiten(14, 14') gefaltet ist, von denen mindestens eine eines der Deckblätter (5, 5', 6, 6') des Druckerzeugnisses (1) bildet, **dadurch gekennzeichnet, dass** das Verfahren Schritte umfasst, bei denen:
- a) man kontinuierlich mindestens eine Fläche (16, 16') einer Papierbahn (15, 15') bedruckt, mit Ausnahme mindestens einer ersten Zone (17a, 17'a, 18a, 18'a) die dazu dient, eines der Deckblätter (5, 5', 6, 6') zu bilden und mindestens einer anderen Zone (19, 19'), die dazu dient, eine Faltlinie (2, 2') zu definieren, wobei man die Zonen (17a, 17'a, 18a, 18'a, 19a, 19'a) mit einem Klebstoff beschichtet.
- b) man die bedruckte Papierbahn (15, 15') in zwei bedruckte Längsbahnen (15a, 15b, 15'a, 15'b) teilt,
- c) man die beiden bedruckten Längsbahnen (15a, 15b, 15'a, 15'b) Fläche auf Fläche verbindet, indem mindestens eine der mit einem Klebstoff beschichteten Zonen (17a, 18a, 19a, 19'a), die auf einer dieser Bahnen (15a, 15'a) gebildet wird, mit einer entsprechenden Zone (17b, 18b, 19b, 19'b), die auf der anderen Bahn (15a, 15'a) gebildet wird, kaschiert,
- d) man eine einzige (15b, 15'b) der so verbundenen zwei Bahnen (15a, 15b, 15'a, 15'b) derart schneidet (bei 22, 23, 23'), dass das Druckerzeugnis entsprechend der Faltlinie (2, 2') gefaltet werden kann.

7. Erzeugnis nach Anspruch 6, **dadurch gekennzeichnet, dass** bei einem zusätzlichen Schritt
- e) man die so gebildeten Bahnen (15c, 15'c) entsprechend anderer vorher festgelegter Faltlinien (12, 12') in mehrere Klappseiten (14, 14') faltet, derart, dass die zwei ersten kaschierten Zonen (17a, 17b, 18a, 18b, 17'a, 17'b, 18'a, 18'b) die Deckblätter (5, 5', 6, 6') des Druckerzeugnisses bilden.

8. Erzeugnis nach Anspruch 6 und Anspruch 7, **dadurch gekennzeichnet dass** in einem zusätzlichen Schritt
- f) man quer die Papierbahnen (15c, 15'c) schneidet, um die Druckerzeugnisse (1) zu vereinzeln.

9. Erzeugnis nach einem der Ansprüche 6 bis 8, **dadurch gekennzeichnet, dass** nach Schritt b) und vor Schritt c) oder nach Schritt c) und vor Schritt d) man die Faltlinie in Einfassung der kaschierten Zone (19b, 19'b) durch Mikroperforationen (2a, 2'a) verwirklicht.

10. Erzeugnis nach einem der Ansprüche 6 bis 9, d.g, dass bei Schritt d) man die Bahn (15b) einerseits längs eines gemeinsamen Randes zu jedem Deckblatt (5, 6) und einer bedruckten Zone (20) der Bahn und andererseits längs der kaschierten Zone (19b), die die Faltlinie (2) des benachbarten Erzeugnisses definiert, schneidet (bei 22, 23).

11. Erzeugnis nach einem der Ansprüche 6 bis 9, **dadurch gekennzeichnet**e dass bei Schritt d) man die Bahn (15'b) nur längs der kaschierten Zone (19'b) schneidet, die die Faltlinie eines benachbarten Erzeugnisses definiert.

12. Erzeugnis nach All, **dadurch gekennzeichnet, dass** es einen Schritt g) nach dem Schritt b) umfasst, bei dem
- man einen Teil (17'b, 18' b) von einer (15'a) der Bahnen auf einen anderen Teil (17'a, 18'a) derselben Bahn kaschiert, um die Deckblätter (5', und 6') zu bilden.
